# EUROPEAN PATENT SPECIFICATION

(11) **EP 1 371 528 B1**
(45) Date of publication and mention of the grant of the patent: **09.03.2005**
(21) Application number: 02254172.6
(22) Date of filing: 14.06.2002
(51) Int. Cl.: B60R 22/195, B60R 22/46

(54) **Pretensioner**
Vorspannvorrichtung
Pretensionneur

(43) Date of publication of application: 17.12.2003
(73) Proprietor: Key Safety Systems, Inc., Sterling Heights, Michigan 48314 (US)
(72) Inventor: Bell, John, Carlisle, Cumbria (GB); Palliser, Martyn, Carlisle, Cumbria CA5 7NF (GB)
(74) Representative: Freeman, Jacqueline Carol

(56) References cited:
- DE-A- 2 304 878
- US-A- 30 396
- US-A- 5 782 423
- US-B1- 6 250 720

## Description

The present invention relates to a pretensioner and particularly to a pretensioner for a vehicle safety restraint mechanism such as a seat belt.

Traditionally a seat belt safety restraint comprises a length of belt webbing connected at both ends to load bearing parts of a vehicle, and arranged to pass across a lap, and also diagonally across a torso, of a vehicle occupant. It is selectively fastened across the occupant by means of a buckle mechanism engaging a buckle tongue slidably attached to the webbing.

To increase comfort for the restrainee, a retractor is fitted at one end of the webbing. This allows the webbing to pay out under relatively low loads to enable limited movement of the restrained occupant, for example to reach in-car entertainment controls or storage compartments. The retractor is biased to keep the webbing relatively taut about the occupant and a locking element is included to lock the retractor against webbing payout in the event of a dangerous situation being detected. For example, an acceleration sensor may activate if the vehicle undergoes rapid acceleration or deceleration indicative of a crash.

The retractor usually comprises a rotatable spool onto which the webbing is wound biased by a clock spring.

In recent years, pretensioners have been introduced to rapidly pull in a length of webbing to actively tighten the belt about the vehicle occupant in the event of a crash condition being sensed. This takes up any slack which may have developed in the belt and helps to more correctly position the occupant in the seat to maximise the effect of the belt protection and of any secondary safety restraint such as an air bag.

Pretensioners comprise a force reservoir such as a pyrotechnically operated gas generator which drives a piston guided inside a cylinder, pulling a cable which rotates the spool and winds in a few coils of webbing before the spool locks and secures the vehicle occupant.

Known such retractor pretensioners are bulky, costly and comprise many parts. They are single operation devices and are prone to jam the restraint locked when fired so that they cannot operate a second time and can thus be dangerous if a vehicle is involved in a second impact.

An example of a known seat belt pretensioner according to the preamble of claim 1 is disclosed in United States Patent No. 5,782,423. That pretensioner is a rack and pinion type pretensioner, where a gear is driven along a toothed rack which causes the spool to rotate which draws in the webbing. However, a major drawback with rack and pinion arrangements is that a large amount of energy is required to drive the gear along the rack. These arrangements are also often quite bulky.

A further example of a pretensioner is disclosed in United States Patent No. 6,250,720 and this is a different type of pretensioner to the present invention. It functions by pretensioning and retracting the seat belt buckle in a linear direction. As a result, the retractor itself is somewhat bulky and elongate and this is undesirable.

It is an object of the invention to provide an improved pretensioner mechanism.

Pretensioners can be constructed according to the invention which have reduced or eliminated jamming, smaller package sizes and which function as or close to normal again even after the pyrotechnic device has fired.

Accordingly, the problems of the prior art set out above are overcome by the provision of a seat belt pretensioner comprising:
a piston;
a cylinder housing the piston;
a force reservoir, activatable when a crash is sensed, to drive the piston along the cylinder;
a resilient band connected to the piston; and means for selectively connecting the band to a retractor spool under a predetermined condition,
wherein the force reservoir comprises a gas generator which has an output in the cylinder on one side of the piston to drive the piston along the cylinder to pull the band into engagement with the connecting means to turn the retractor spool, characterised in that:
the piston comprises a first piston member connected in the band and a second piston member separated from the first piston member by a resilient member.

For example the engagement will be arranged to occur when a crash is sensed as a result of (acceleration or deceleration exceeding a predetermined threshold.

According to a preferred embodiment the gas generator may be pyrotechnically activated.

According to one embodiment the band has indexing holes or slots punched or cut along at least a part of its length at intervals corresponding to the spacing of teeth on an outer periphery of a drive wheel attached to the spool. As the band is pulled by the piston it tightens around the drive wheel and the indexing holes engage the teeth, turning the drive wheel and thus the spool and pulling in the webbing to secure the occupant.

Preferably the band is made of steel and it is stored compactly as a coil in a housing adjacent the cylinder. The band is routed around the inside perimeter wall of the housing, adjacent to, but distanced from, the teeth on the drive wheel connected to the spool. The natural spring tendency of the steel band will tend to push it against the inner wall of the housing away from the teeth. Thus after pretensioning forces have dissipated the band will naturally spring back away from the drive wheel, releasing the spool to rotate freely again. This is in contrast to traditional pretensioners which tend to remain locked after pretensioning.

A return spring may be located at or towards the end of the cylinder to push the piston back at the end of the pretensioning stroke.

The piston comprises according to the invention two piston members connected by a resilient assembly, advantageously such as a coil spring. The piston member which is closest to the far end of the cylinder fits more snugly in the cylinder than the second piston, ie. it seals against the inside wall of the cylinder more effectively and slides less easily. During pretensioning both pistons move together along the cylinder pulling the band and rotating the spool. After pretensioning the gas dissipates and the piston moves back down the cylinder. The compression spring between the two pistons forces them apart and this moves the band back to the initial position where it is disengaged from the spool.

The cylinder is preferably sealed at one end around the band.

For a better understanding of the present invention, and to show how the same may be carried into effect, reference will now be made, by way of example, to the accompanying drawings, in which:
Figure 1 is a schematic cross section of a pretensioner according to the present invention.
Figure 2 is a cross section of part of the pretensioner of figure 1 before pretensioning.
Figure 3 is a cross section of part of the pretensioner of figure 1 immediately after pretensioning.
Figure 4 is an enlarged perspective view of part of figure 1.

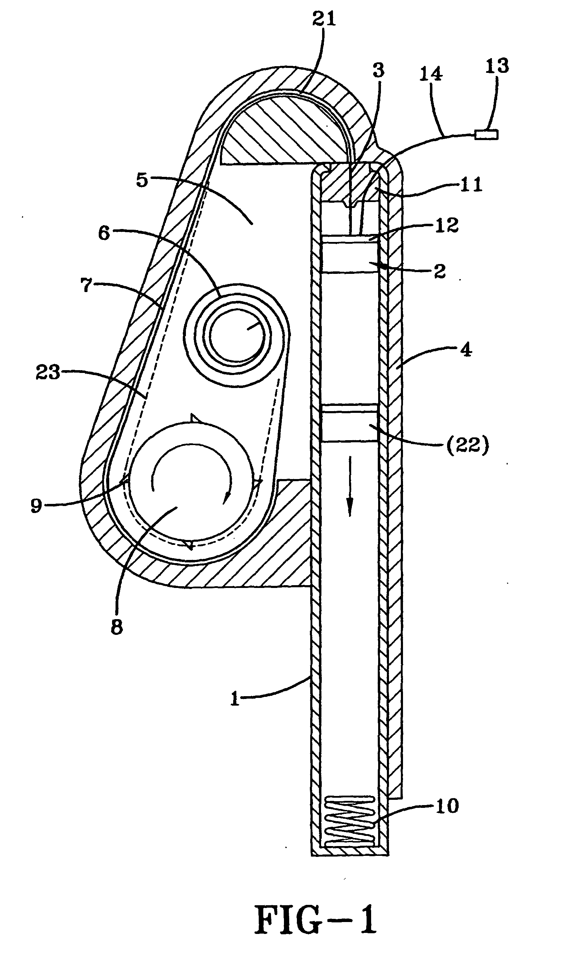

In figure 1 a pretensioner cylinder or tube 1 is shown containing a piston 2 connected to a spring steel band 3. The pretensioner tube 1 may have a circular, square or any other cross-sectional shape and the piston 2 will have the same cross-section to fit snugly in the tube 1. The tube 1 may be straight as shown or have a circular or U shape as is convenient for the retractor package. The tube 1 is mounted to a plastic housing 4 which has a broad hollow chamber 5 in which the steel band 3 is stored in a coil 6.

The band 3 normally passes adjacent the inside wall of the housing 4 as shown by the solid line 7, through a guide section 21 at the top and to the coil 6 around a drive wheel 8. The drive wheel 8 is connected to a retractor spool (not shown) and is free to rotate until the pretensioner is fired. The drive wheel 8 has outwardly pointing teeth 9.

A return spring 10 is located at one end of the tube 1 and a gas tight seal 11 at the other.

The piston 1 as shown has an integral gas generator 12 fired by a pyrotechnic initiator connected to a source of electricity 13 by wires 14. The gas generator may be separate with an output facing into the tube 1 on the side of the piston 2 connected to the band 3.

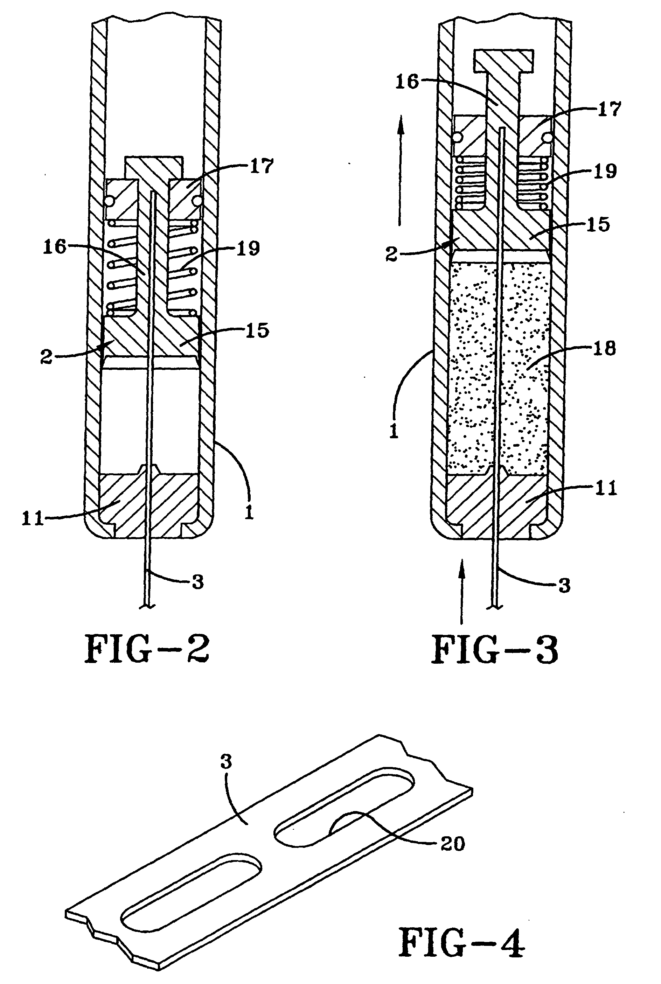

In figures 2 and 3 the piston 1 is shown in more detail. A lower piston part 15 is connected to the band 3, for example by being moulded around an end of the band. The lower piston part 15 has a narrow extension section 16 which passes through a hole in the middle of an upper piston part 17. A coil spring 19 fits around the extension section 16 and biases the upper and lower parts away from each other.

When the pretensioner fires, gas 18 fills the tube 1 between the seal 11 and the lower piston part 15, moving the piston assembly along the tube 1 as shown in figure 3 and at 22 in figure 1. Movement of piston 2 to position 22 pulls the band 3 and tightens it around the drive wheel 21 as shown by the dotted line 23 tending to compress the spring 19 because the upper piston part 17 is a tighter fit in the tube 1 than the lower piston part 15. Subsequently the gas pressure reduces and the piston assembly moves back towards the position shown in figure 2 under action of the resilience of the steel band 3 and the coil spring 19. The upper and lower piston parts are pushed apart by the spring 19 and the band 3 disengages from the drive wheel 8 allowing the spool to rotate freely again.

Figure 4 is an enlarged perspective view of part of the band 3 showing spaced slots 20 which engage with the teeth 9 of the drive wheel 8. The teeth are advantageously saw tooth shapes as shown to facilitate release of the band after pretensioning. The band may typically be 10-15 mm wide.

The pretensioner of the invention provides an improved packaging capability since the steel band can be coiled very small. It also tends to have fewer parts and is cheaper to manufacture. Also, a lower power gas generator is needed than in some traditional pretensioners such as those known in the field as rack and pinion or ball type arrangements, because the energy required to move the steel band is relatively low.

## Claims

1. A seat belt pretensioner comprising:
a piston (2);
a cylinder (1) housing the piston (2);
a force reservoir, activatable when a crash is sensed, to drive the piston(2)along the cylinder (1);
a resilient band (3) connected to the piston (2); and
means for selectively connecting the band (3) to a retractor spool under a predetermined condition
wherein the force reservoir comprises a gas generator which has an output in the cylinder (1) on one side of the piston (2) to drive the piston (2) along the cylinder (1) to pull the band (3) into engagement with the connecting means to turn the retractor spool, **characterised in that**:
the piston (2) comprises a first piston member connected to the band (3) and a second piston member separated from the first piston member by a resilient member.

2. A pretensioner according to claim 1 wherein the resilient assembly is a coil spring.

3. A pretensioner according to Claims 1 or 2 wherein the first piston member fits more snugly in the cylinder (1) than the second piston member.

4. A pretensioner according to any one of the preceding claims wherein the connecting means comprises at least one indexing hole in the band (3) and a toothed drive wheel attached to the spool to engage the indexing hole.

5. A pretensioner according to any one of the preceding claims wherein the gas generator is pyrotechnically activated.

6. A pretensioner according to any one of the preceding claims comprising a plurality of indexing holes spaced along the band at intervals corresponding to the spacing of teeth on the outer periphery.

7. A pretensioner according to any one of the preceding claims wherein the band is made of steel.

8. A pretensioner according to any one of the preceding claims wherein the band is stored as a coil in the housing.

9. A pretensioner according to any one of the preceding claims comprising a return spring located at or towards the end of the cylinder to push the piston back down the cylinder at the end of a pretensioning stroke.

10. A pretensioner according to any one of the preceding claims wherein the cylinder is sealed at one end around the band.

11. A pretensioner according to any one of the preceding claims wherein the predetermined condition comprises the vehicle extending a predetermined acceleration or deceleration threshold.

## Patentansprüche

1. Sicherheitsgurtstraffer, der aufweist:
einen Kolben (2);
einen Zylinder (1), der den Kolben (2) aufnimmt;
einen Kraftbehälter, der aktivierbar ist, wenn ein Zusammenstoß registriert wird, um den Kolben (2) längs des Zylinders (1) anzutreiben;
ein elastisches Band (3), das mit dem Kolben (2) verbunden ist; und
eine Einrichtung für das selektive Verbinden des Bandes (3) mit einer Gurtaufrollertrommel bei einem vorgegebenen Zustand,
worin der Kraftbehälter einen Gasgenerator aufweist, der einen Ausgang in den Zylinder (1) auf einer Seite des Kolbens (2) aufweist, um den Kolben (2) längs des Zylinders (1) anzutreiben, um das Band (3) mit der Verbindungseinrichtung in Eingriff zu ziehen, um die Gurtaufrollertrommel zu drehen, **dadurch gekennzeichnet, daß**:
der Kolben (2) ein erstes Kolbenelement, das mit dem Band (3) verbunden ist, und ein zweites Kolbenelement aufweist, das vom ersten Kolbenelement durch ein elastisches Element getrennt ist.

2. Gurtstraffer nach Anspruch 1, bei dem die elastische Baugruppe eine Schraubenfeder ist.

3. Gurtstraffer nach Anspruch 1 oder 2, bei dem das erste Kolbenelement enganliegender in den Zylinder (1) paßt als das zweite Kolbenelement.

4. Gurtstraffer nach einem der vorhergehenden Ansprüche, bei dem die Verbindungseinrichtung mindestens ein Bezugsloch im Band (3) und ein Antriebszahnrad aufweist, das an der Trommel befestigt ist, um mit dem Bezugsloch in Eingriff zu kommen.

5. Gurtstraffer nach einem der vorhergehenden Ansprüche, bei dem der Gasgenerator pyrotechnisch aktiviert wird.

6. Gurtstraffer nach einem der vorhergehenden Ansprüche, der eine Vielzahl von Bezugslöchern aufweist, die längs des Bandes in Intervallen beabstandet sind, die dem Abstand der Zähne auf dem äußeren Umfang entsprechen.

7. Gurtstraffer nach einem der vorhergehenden Ansprüche, bei dem das Band aus Stahl besteht.

8. Gurtstraffer nach einem der vorhergehenden Ansprüche, bei dem das Band als eine Spule im Gehäuse gelagert wird.

9. Gurtstraffer nach einem der vorhergehenden Ansprüche, der eine Rückzugfeder aufweist, die am oder in Richtung des Endes des Zylinders angeordnet ist, um den Kolben am Ende eines Gurtstraffungshubes nach unten im Zylinder zurückzudrücken.

10. Gurtstraffer nach einem der vorhergehenden Ansprüche, bei dem der Zylinder an einem Ende um das Band herum abgedichtet ist.

11. Gurtstraffer nach einem der vorhergehenden Ansprüche, bei dem der vorgegebene Zustand aufweist, daß das Fahrzeug einen vorgegebenen Beschleunigungs- oder Abbremsungsschwellenwert übertritt.

## Revendications

1. Dispositif de prétension d'une ceinture de sécurité, comprenant:
un piston (2);
un cylindre (1) recevant le piston (2);
un réservoir de force, pouvant être actionné lors de la détection d'une collision, pour entraîner le piston (2) le long du cylindre (1);
une bande élastique (3) connectée au piston (2); et
un moyen pour connecter de manière sélective la bande (3) à une bobine d'enroulement en présence de conditions prédéterminées;
le réservoir de force comprenant un générateur de gaz ayant une sortie dans le cylindre (1) sur un côté du piston (2) pour entraîner le piston (2) le long du cylindre (1), pour entraîner l'engagement de la bande (3) dans le moyen de connexion afin de faire tourner la bobine d'enroulement; **caractérisé en ce que**:
le piston (2) comprend un premier élément de piston connecté à la bande (3) et un deuxième élément de piston séparé du premier élément de piston par un élément élastique.

2. Dispositif de prétension selon la revendication 1, dans lequel l'assemblage élastique est constitué par un ressort hélicoïdal.

3. Dispositif de prétension selon les revendications 1 ou 2, dans lequel le premier élément de piston est ajusté plus fermement dans le cylindre (1) que le deuxième élément de piston.

4. Dispositif de prétension selon l'une quelconque des revendications précédentes, dans lequel le moyen de connexion comprend au moins un trou d'indexation dans la bande (3) et une roue d'entraînement dentée fixée sur la bobine en vue d'un engagement dans le trou d'indexation.

5. Dispositif de prétension selon l'une quelconque des revendications précédentes, dans lequel le générateur de gaz est à actionnement pyrotechnique.

6. Dispositif de prétension selon l'une quelconque des revendications précédentes, comprenant plusieurs trous d'indexation espacés le long de la bande à des intervalles correspondant à l'espacement des dents sur la périphérie externe.

7. Dispositif de prétension selon l'une quelconque des revendications précédentes, dans lequel la bande est composée d'acier.

8. Dispositif de prétension selon l'une quelconque des revendications précédentes, dans lequel la bande est rangée sous forme enroulée dans le boîtier.

9. Dispositif de prétension selon l'une quelconque des revendications précédentes, comprenant un ressort de rappel agencé au niveau de l'extrémité du cylindre ou en direction de celle-ci pour entraîner le déplacement de retour du piston vers le bas du cylindre à la fin de la course de prétension.

10. Dispositif de prétension selon l'une quelconque des revendications précédentes, dans lequel le cylindre est fermé de manière étanche autour de la bande au niveau d'une extrémité.

11. Dispositif de prétension selon l'une quelconque des revendications précédentes, dans lequel les conditions prédéterminées comprennent une accélération ou une décélération du véhicule supérieures à un seuil prédéterminé.
